(19) Europäisches Patentamt
European Patent Office
Office européen des brevets

(11) **EP 3 239 306 A1**

(12) **EUROPÄISCHE PATENTANMELDUNG**

(43) Veröffentlichungstag:
**01.11.2017 Patentblatt 2017/44**

(51) Int Cl.:
***C21B 13/14*** *(2006.01)*     ***C21B 13/00*** *(2006.01)*

(21) Anmeldenummer: **16167288.6**

(22) Anmeldetag: **27.04.2016**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Primetals Technologies Austria GmbH
4031 Linz (AT)**

(72) Erfinder:
• **Millner, Robert
3382 Loosdorf (AT)**

• **Panhuber, Wolfgang
4020 Linz (AT)**
• **Rein, Norbert
1060 Wien (AT)**
• **Rosenfellner, Gerald
3352 St.Peter/Au (AT)**
• **Wurm, Johann
4283 Bad Zell (AT)**
• **Holzleithner, Franz
4663 Laarkirchen (AT)**

(74) Vertreter: **Metals@Linz
Primetals Technologies Austria GmbH
Intellectual Property Upstream IP UP
Turmstraße 44
4031 Linz (AT)**

(54) **VERFAHREN UND VORRICHTUNG ZUR HERSTELLUNG VON FLÜSSIGEM ROHEISEN**

(57)     Die Erfindung betrifft ein Verfahren zur Herstellung von flüssigem Roheisen (1), wobei das Verfahren umfasst

- Reduktion von eisenoxidhaltigen Einsatzstoffen (2) zu einem teilreduzierten ersten Eisenprodukt (3) in einer ersten Reduktionsanlage (4),
- Einbringen des teilreduzierten ersten Eisenprodukts (3), eines ersten sauerstoffhaltigen Gases (9, 9a) und eines ersten Kohlenstoffträgers (10) in einen Einschmelzvergaser (11),
- Einbringen eines zweiten gasförmigen und/oder flüssigen Kohlenstoffträgers (13) sowie eines zweiten sauerstoffhaltigen Gases (9b) in einen Mischbereich (18) innerhalb des Einschmelzvergasers (11) oberhalb von dessen Festbett,
- Vermischen des zweiten gasförmigen und/oder flüssigen Kohlenstoffträgers (13) mit dem zweiten sauerstoffhaltigen Gas (9b) im Mischbereich (18), wobei zum Erreichen einer partiellen Oxidation des zweiten gasförmigen oder flüssigen Kohlenstoffträgers (13) innerhalb des Mischbereichs (18) das Verbrennungsluftverhältnis im Bereich von 0,2 bis 0,45 eingestellt wird, bevorzugt zwischen 0,3 und 0,35, und
- Durchmischen des aus der partiellen Oxidation resultierenden Gases aus dem Mischbereich (18) mit dem Gas im restlichen Volumen innerhalb des Einschmelzvergasers (11).

FIG 1

EP 3 239 306 A1

**Beschreibung**

GEBIET DER ERFINDUNG

Die Erfindung betrifft ein Verfahren zur Herstellung von flüssigem Roheisen, wobei das Verfahren umfasst

- Reduktion von eisenoxidhaltigen Einsatzstoffen zu einem teilreduzierten ersten Eisenprodukt in einer ersten Reduktionsanlage mittels eines Reduktionsgases und Abziehen des bei der Reduktion verbrauchten Reduktionsgases als Topgas oder Offgas,
- Einbringen des teilreduzierten ersten Eisenprodukts, eines ersten sauerstoffhaltigen Gases und eines ersten Kohlenstoffträgers in einen Einschmelzvergaser,
- Vergasung der Kohlenstoffträger mit dem sauerstoffhaltigen Gas und Aufschmelzen des teilreduzierten ersten Eisenprodukts zu dem flüssigen Roheisen unter Entstehung des Reduktionsgases im Einschmelzvergaser,
- Einbringen zumindest einer Teilmenge des Reduktionsgases in die erste Reduktionsanlage mittels einer

Reduktionsgasleitung.

Bei einem solchen Schmelzreduktionsverfahren sind weiters in der Regel Gasreinigungsanlagen (einerseits für das Topgas oder Offgas aus der Reduktionsanlage, andererseits für das Reduktionsgas aus dem Einschmelzvergaser), vorgesehen, sowie je nach Anlagenkonfiguration eine Vorrichtung zur $CO_2$-Entfernung aus dem Top- oder Offgas, nach dem Stand der Technik meist mittels Druckwechsel-Adsorption, falls dieses einer zweiten Reduktionsanlage zugeführt oder innerhalb des Schmelzreduktionsverfahrens verwendet werden soll.

Bekannte Schmelzreduktionsverfahren sind der Corex®- und der Finex®-Prozess. Der Corex®-Prozess ist ein zweistufiges Schmelzreduktionsverfahren. Die Schmelzreduktion kombiniert den Prozess der indirekten Reduktion (Vorreduktion von Eisenoxid zu Eisenschwamm, oftmals auch als Direktreduktion bezeichnet) mit einem Schmelzprozess (einschließlich Restreduktion) im sogenannten Einschmelzvergaser. Das ebenfalls bekannte Finex®-Verfahren unterscheidet sich vom Corex®-Verfahren durch den direkten Einsatz von Eisenerz als Feinerz, welches in mehreren hintereinander angeordneten Wirbelschichtreaktoren vorreduziert wird.

STAND DER TECHNIK

Zur Herstellung von flüssigem Roheisen, womit auch die Herstellung roheisenähnlicher Produkte umfasst sein soll, gibt es im Wesentlichen zwei bekannte gängige Verfahren: das Hochofenverfahren und die Schmelzreduktion, letzteres beispielsweise als Corex®- oder Finex®-Verfahren. Die gegenständliche Erfindung bezieht sich auf die Schmelzreduktion.

Bei der Schmelzreduktion kommt ein Einschmelzvergaser zum Einsatz, in dem heißes flüssiges Metall, bevorzugt Roheisen, hergestellt wird, sowie zumindest eine Reduktionsanlage, etwa zumindest ein Reduktionsreaktor, in dem der Träger des Eisenerzes (Stückerz, Feinerz, Pellets, Sinter) mit Reduktionsgas zumindest teilreduziert wird, wobei das Reduktionsgas im Einschmelzvergaser durch Vergasung von hauptsächlich Kohle und Koks mit technisch reinem Sauerstoff (Sauerstoffgehalt von 90% oder mehr) erzeugt wird. Bei dieser Vergasung wird die erforderliche Prozesswärme erzeugt und das Reduktionsgas, welches für die vorgelagerten Prozessstufen, wie Vorwärmung, Trocknung, Eisenreduktion, Kalzinierung, etc. erforderlich ist.

Teilreduziert bedeutet, dass der Reduktionsgrad des Eisenträger-Materials im Reduktionsreaktor erhöht wird, der Reduktionsgrad aber unter 100% bleibt. Der typische Reduktionsgrad nach der Reduktionsanlage liegt zwischen 50% und 90%. Der Reduktionsgrad RD ist ein Maß für den Abbau des Sauerstoffs aus dem Oxid des Eisenträger-Materials und wird durch folgende Formel beschrieben

$$RD=(1-(O/(1.5*Fe_{tot})))*100,$$

wobei O den Stoffmengenanteil des Eisenträger-Materials an Sauerstoff und $Fe_{tot}$ den Stoffmengenanteil des Eisenträger-Materials an Eisen bezeichnet (jeweils in Mol%).

Beim Schmelzreduktionsverfahren wird entweder so viel fester Kohlenstoffträger zugesetzt, dass die erzeugte Reduktionsgasmenge ausreichend ist, um die gewünschte Teilreduktion bei der Vorreduktion zu erreichen, mit dem Nachteil, dass die Menge der verbrauchten Kohlenstoffträger unwirtschaftlich hoch ist. Oder es wird weniger fester Kohlenstoffträger zugesetzt und die erforderliche Reduktionsgasmenge durch Rückführung und Aufbereitung von unverbrauchtem Prozessgas zur Verfügung gestellt. Diese letztere Variante erfordert allerdings zusätzlich zumindest einen Kompressor und eine $CO_2$-Entfernungsanlage, was erhöhte Investitionskosten und erhöhten Energieverbrauch während des Betriebs bedingt.

DARSTELLUNG DER ERFINDUNG

Es ist daher eine Aufgabe der Erfindung, ein Verfahren zur Herstellung von flüssigem Roheisen zur Verfügung zu stellen, mit welchem der Verbrauch von festen Kohlenstoffträgern im Einschmelzvergaser mit möglichst geringem Aufwand an zusätzlichen Einrichtungen bzw. Investitionen reduziert werden kann.

Die Aufgabe wird durch ein Verfahren nach Anspruch 1 gelöst, indem bei einem eingangs beschriebenen Verfahren folgende weitere Schritte durchgeführt werden:

- Einbringen eines zweiten gasförmigen und/oder flüssigen Kohlenstoffträgers sowie eines zweiten sauerstoffhaltigen Gases in einen Mischbereich innerhalb des Einschmelzvergasers oberhalb von dessen Festbett (Charbett),
- Vermischen des zweiten gasförmigen und/oder flüssigen Kohlenstoffträgers mit dem zweiten sauerstoffhaltigen Gas im Mischbereich, wobei zum Erreichen einer partiellen Oxidation des zweiten gasförmigen oder flüssigen Kohlenstoffträgers innerhalb des Mischbereichs das Verbrennungsluftverhältnis im Bereich von 0,2 bis 0,45 eingestellt wird, bevorzugt zwischen 0,3 und 0,35, und
- Durchmischen des aus der partiellen Oxidation resultierenden Gases aus dem Mischbereich mit dem Gas im restlichen Volumen innerhalb des Einschmelzvergasers.

Erfindungsgemäß werden also wesentliche Mengen von nur flüssigen, nur gasförmigen oder flüssigen und gasförmigen Kohlenstoffträgern herangezogen, um daraus Reduktionsgas in Form von $H_2$ und CO zu erzeugen, welches Reduktionsgas einen wesentlichen Teil des gesamten, im Einschmelzvergaser erzeugten Reduktionsgases bildet. Die Bezeichnung "zweiter Kohlenstoffträger" bedeutet, dass dieser vom ersten Kohlenstoffträger verschieden ist. Der zweite Kohlenstoffträger kann aber selbst wieder verschiedene Stoffe umfassen und auch an mehreren Stellen des Einschmelzvergasers eingebracht werden, insofern kann er selbstverständlich auch dritte, vierte, usw. flüssige und/oder feste Kohlenstoffträger umfassen. Der zweite gasförmige oder flüssige Kohlenstoffträger kann insbesondere Erdgas, Koksofengas, Alkane und Aromate (beispielsweise Kokerei-Teer) enthalten.

Das zweite sauerstoffhaltige Gas ist vorzugsweise technisch reiner Sauerstoff mit einem $O_2$-Gehalt von zumindest 90%. Damit kann der Stickstoff-Eintrag in den Einschmelzvergaser gering gehalten werden. Auch hier gilt, dass das "zweite sauerstoffhaltige Gas" Gas aus mehreren Quellen enthalten kann und an mehreren Stellen in den oder die entsprechenden Mischbereiche des Einschmelzvergasers eingebracht werden kann, wobei alle diese Gase als "zweites sauerstoffhaltiges Gas" bezeichnet werden.

Es wird also erfindungsgemäß ein zweiter gasförmiger oder flüssiger Kohlenstoffträger, räumlich unabhängig vom ersten Kohlenstoffträger, und ein zweites sauerstoffhaltiges Gas, ebenfalls räumlich unabhängig vom ersten sauerstoffhaltigen Gas, in einen Mischbereich (oder mehrere Mischbereiche) innerhalb des Einschmelzvergasers eingebracht. Dieser Mischbereich ist vom restlichen Volumen innerhalb des Einschmelzvergasers hinsichtlich Gasströmungen, Reaktionen und Temperatur möglichst nicht beeinflusst, damit sichergestellt wird, dass zweiter Kohlenstoffträger und zweites sauerstoffhaltiges Gas miteinander vermischt werden, ohne dass wesentliche Teile des Reduktionsgases, das sich innerhalb des Einschmelzvergasers befindet, bereits zu dieser Mischung hinzutritt, bevor zweiter Kohlenstoffträger und zweites sauerstoffhaltiges Gas miteinander reagiert haben.

Durch die Mischung von zweitem Kohlenstoffträger und zweitem sauerstoffhaltigen Gas beim erfindungsgemäßen Verbrennungsluftverhältnis kommt es zu einer partiellen Oxidation, das heißt, die Kohlenwasserstoffe des zweiten Kohlenstoffträgers werden zum überwiegenden Teil zu Kohlenstoffmonoxid CO und Wasserstoff $H_2$ umgesetzt und stehen somit als reduzierende Bestandteile des Reduktionsgases zur Verfügung.

Zu einem kleinen Teil (kleiner 25%) werden im Mischbereich der Sauerstoff des sauerstoffhaltigen Gases und die Kohlenwasserstoffe vollständig oxidiert zu Kohlenstoffdioxid $CO_2$ und Wasser $H_2O$. Damit wird sichergestellt, dass die Temperaturen im Mischbereich ausreichend hoch sind (oberhalb 1000 °C), um eine hohe Umsetzungsrate zu Reduktionsgas zu erreichen.

Ebenfalls zu einem kleinen Teil (kleiner 10%) werden die Kohlenwasserstoffe des zweiten Kohlenstoffträgers nicht zerlegt oder nur in kleinere Kohlenwasserstoffe. Diese nicht oder nur teilweise zerlegten Kohlenwasserstoffe können dann im restlichen Volumen innerhalb des Einschmelzvergasers durch als Katalysator wirkende, ohnehin vorhandene Staubpartikel, welche unter anderem auch metallisches Eisen enthalten, weiter zerlegt werden, ohne dass ein Zusatz von Katalysatoren notwendig wäre. Deshalb wird das aus dem Mischbereich resultierende Gas auch dem restlichen Volumen innerhalb des Einschmelzvergasers zugeführt.

Für das Mischen im Mischbereich sind nicht zwingend bewegliche Einrichtungen vorzusehen, meist wird allein durch entsprechenden Druck und/oder entsprechende Richtungen beim Einbringen des zweiten Kohlenstoffträgers und des zweiten sauerstoffhaltigen Gases eine ausreichende Mischung erzielt werden. Das heißt, die Richtung des zweiten Kohlenstoffträgers beim Einbringen in den Mischbereich kann verschieden sein von der Richtung des zweiten sauerstoffhaltigen Gases beim Einbringen in den Mischbereich.

Ebenso ist für das Durchmischen des resultierenden Gases aus dem Mischbereich mit dem Gas im restlichen Volumen des Einschmelzvergasers wohl keine eigene bewegliche Einrichtung nötig, sondern werden ebenso allein durch Druck und Richtung beim Einbringen des zweiten Kohlenstoffträgers und des zweiten sauerstoffhaltigen Gases bewirkt, weil ja ohnehin eine räumliche Verbindung des Mischbereichs mit dem restlichen Volumen des Einschmelzvergasers besteht. Durch die aufgrund der partiellen Oxidation entstehende Wärme und durch die Verwirbelung von zweitem Kohlenstoffträger mit zweitem sauerstoffhaltigem Gas vermischt sich das resultierende Gas aus dem Mischbereich mit dem Gas im restlichen Einschmelzvergaser.

Das Verbrennungsluftverhältnis wird meist mit Lambda bezeichnet und auch Luftverhältnis oder Luftzahl genannt. Es ist eine dimensionslose Kennzahl aus der Verbrennungslehre, die das stöchiometrische Verhältnis aus Luft, hier dem zweiten sauerstoffhaltigen Gas, und Brennstoff, hier dem zweiten Kohlenstoffträger, in einem Verbrennungsprozess angibt. Mit dem erfindungsgemäßen Verbrennungsluftverhältnis kann bei der partiellen Oxidation ein Oxidationsgrad von kleiner 25%, insbesondere kleiner 15% erzielt werden und eine durchschnittliche Temperatur von 1150-1500°C im Mischbereich von zweitem sauerstoffhaltigen Gas und zweitem Kohlenstoffträger.

Zwar ist es grundsätzlich bekannt, auch gasförmige Kohlenstoffträger zusätzlich zu den stückigen ersten Kohlenstoffträgern in einen Einschmelzvergaser einzubringen, siehe hierzu etwa die WO 2015/000604 A1, wo bei einer Ausführungsvariante schwefelhaltiges Gas zusammen mit einem sauerstoffhaltigen Gas in den Einschmelzvergaser eingebracht wird. Allerdings erfolgt das Einbringen mittels eines herkömmlichen Sauerstoffbrenners, dessen Betriebsweise nämlich nicht ausgerichtet ist, durch Einstellen eines vordefinierten Mischungsverhältnisses das Ausbringen von Reduktionsgas ($H_2$ und CO) zu maximieren bei gleichzeitiger Minimierung der Bildung von $CO_2$, $H_2O$ und C. Zudem mangelt es dem herkömmlichen Sauerstoffbrenner gemäß der WO 2015/000604 A1 an einem definierten räumlichen Mischbereich innerhalb des Einschmelzvergasers für ein Vermischen von Gas und Sauerstoff. Zumindest wird in der WO 2015/000604 A1 im Sauerstoffbrenner keine partielle Oxidation unter kontrollierten Bedingungen geoffenbart. Ein Einsatz von größeren Mengen von gasförmigen Kohlenstoffträgern, wie beim erfindungsgemäßen Verfahren aufgrund des Mischbereichs möglich, kann mit herkömmlichen Sauerstoffbrennern ohne gezielte Kontrolle des sauerstoffhaltigen Gases im Verhältnis zu den gasförmigen Kohlenstoffträgern nicht erreicht werden, weil ohne Kontrolle der Oxidationsgrad des gebildeten Reduktionsgases für die Vorreduktion der Eisenträger in der ersten Reduktionsanlage zu hoch werden würde.

Um im Mischbereich ohne weitere Einrichtungen eine ausreichend hohe Temperatur für die partielle Oxidation bei gleichzeitig hohem Austrag der Reduktionsgaskomponenten CO und $H_2$ sicherzustellen, ist in einer Ausführungsvariante vorgesehen, dass der Mischbereich vom im Einschmelzvergaser befindlichen Reduktionsgas umgeben wird. Dadurch werden die Wärmeverluste des Mischbereichs minimiert. Das den Mischbereich umgebende Gas innerhalb des Einschmelzvergasers hat typischer Weise eine Temperatur von 1050°C, die Reaktionszone im Mischbereich eine Temperatur von 1150-1500°C, sodass der Reaktionsbereich des Mischbereichs durch das umgebende Gas jedenfalls nicht wesentlich abkühlt. Der Staub im Gas innerhalb des Einschmelzvergasers, das den Mischbereich umgibt, verringert zusätzlich den Wärmeverlust durch Abstrahlung des Mischbereichs zum umgebenden Reduktionsgas hin.

Um eine möglichst ungestörte Vermischung von zweitem Kohlenstoffträger und zweitem sauerstoffhaltigen Gas zu erreichen, kann vorgesehen sein, dass der Mischbereich vom restlichen Volumen innerhalb des Einschmelzvergasers zumindest teilweise räumlich abgetrennt ist.

Dazu kann vorgesehen sein, dass der Mischbereich zumindest teilweise durch eine nach außen gerichtete Ausstülpung der Innenwand des Einschmelzvergasers gebildet wird. Die Innenwand des Einschmelzvergasers ist also in einem begrenzten Bereich, im Verhältnis zum umgebenden Bereich, nach außen gewölbt. Die Ausstülpung kann etwa annähernd die Form eines Zylinders oder die Form einer Kugelkalotte, insbesondere einer Halbkugel, haben. Insbesondere kann die Ausstülpung als Rohr ausgebildet sein.

Dort, wo die Ausstülpung an den umgebenden Bereich der Innenwand des Einschmelzvergasers anschließt (also an der gedachten Fortsetzung der Innenwand des Einschmelzvergasers, wenn keine Ausstülpung vorhanden wäre), kann die Querschnittsfläche (immer parallel zur Fläche der nicht ausgestülpten Innenwand gesehen) der Ausstülpung am größten sein, wie das bei einer Ausstülpung in Form einer Kugelkalotte der Fall wäre. Es kann aber auch sein, dass die Ausstülpung weiter außen eine größere Querschnittsfläche aufweist, das heißt, dass die Ausstülpung dort, wo sie an den umgebenden Bereich der Innenwand anschließt, eine Einschnürung aufweist. Diese Einschnürung dient dazu, den Mischbereich besser vom restlichen Volumen des Einschmelzvergasers abzugrenzen. In jedem Fall kann der durch eine Ausstülpung gebildete Mischbereich zusätzlich durch Trennwände, die in das Innere des Einschmelzvergasers ragen, vergrößert werden.

Um gute Bedingungen für eine katalytische Reaktion von nicht zerlegten Kohlenwasserstoffen bei Austritt aus dem Mischbereich zu erzielen, kann vorgesehen sein, dass der Mischbereich sich über dem Festbett des Einschmelzvergasers in einem Temperaturbereich von 1000-1100°C befindet, insbesondere um 1050°C. Dies wird in der Regel der Fall sein, wenn sich der Mischbereich 1-2 m oberhalb des Festbetts des Einschmelzvergasers befindet, z.B. auf gleicher Höhe, auf der auch die Staubbrenner angeordnet sind. Dies stellt zusätzlich eine ausreichende Verweilzeit nach der Vermischung des Gases aus dem Mischbereich mit dem übrigen Reduktionsgas, das nicht aus dem Mischbereich stammt, sicher.

Um einen möglichst hohen Ertrag von Reduktionsgas bei einem möglichst geringen Eintrag von festen Kohlenstoffträgern zu erzielen, kann vorgesehen sein, dass im Falle eines gasförmigen zweiten Kohlenstoffträgers, beispielsweise in Form von Erdgas, dem Einschmelzvergaser pro Tonne Roheisen mehr als 100 $m^3$ vom zweiten Kohlenstoffträger zugeführt werden, insbesondere mehr als 140 $m^3$ pro Tonne Roheisen.

Durch die erfindungsgemäße partielle Oxidation von flüssigen oder gasförmigen Kohlenstoffträgern mit technisch reinem Sauerstoff kann im Einschmelzvergaser für die erste Reduktionsanlage ein besonders stickstoffarmes Reduktionsgas hergestellt werden, da das Gasrecycling von Top- oder Offgas zum Reduktionsgas entfallen kann sowie auch das Einbringen von pulverförmiger Kohle, was meist mittels Stickstoff als Fördermittel erfolgt. Deshalb ist das erfindungsgemäß hergestellte Reduktionsgas auch gut für den Einsatz in einer nachgeschalteten Direktreduktionsanlage geeignet. Dabei kann etwa ein Reformer zur Herstellung des Reduktionsgases für die Direktreduktionsanlage entfallen, da das Reduktionsgas durch das erfindungsgemäße Verfahren im Einschmelzvergaser hergestellt wird. Entsprechend kann daher vorgesehen sein, dass das Topgas oder Offgas zumindest teilweise in eine zweite Reduktionsanlage eingebracht wird, die als Direktreduktionsschacht oder als Wirbelschicht ausgebildet ist und in der weitere eisenoxidhaltige Einsatzstoffe zu einem teilreduzierten zweiten Eisenprodukt, insbesondere zu Eisenschwamm, reduziert werden.

In einer Direktreduktionsanlage werden stückige Eisenerzträger (Stückerz oder Pellets) oder Feinerz im festen Zustand bei 750-1000°C durch Reduktionsgas reduziert. Dabei entsteht direkt reduziertes Eisen (englisch: direct reduced iron, kurz DRI), das auch als Eisenschwamm bezeichnet wird. Die Direktreduktionsanlage enthält als Herzstück einen Reduktionsreaktor, der entweder als Reduktionsschacht im Sinne eines Festbettreaktors oder in Form von Wirbelschichtreaktoren ausgebildet ist, in den bzw. in die das stückige Eisenerz oder Feinerz und das Reduktionsgas eingebracht werden.

Eine Direktreduktionsanlage kann aber auch Eisenbriketts erzeugen, wobei die heißen reduzierten Oxidmaterialien mittels Heißbrikettierung zu größeren Einheiten agglomeriert werden (englisch: hot briquetted iron, kurz HBI oder hot compacted iron, kurz HCI). Auch sogenanntes niedrig reduziertes Eisen (englisch: low reduced iron, kurz LRI) kann bei entsprechender Verfahrensführung aus dem Reduktionsschacht oder Wirbelschichtreaktor einer Direktreduktionsanlage abgezogen werden.

Ein möglicher Einschmelzvergaser zur Durchführung des erfindungsgemäßen Verfahrens umfasst zumindest

- eine Eisenproduktzufuhrleitung zum Einbringen des teilreduzierten ersten Eisenprodukts,
- eine Medienzufuhrleitung zum Einbringen eines ersten sauerstoffhaltigen Gases und
- eine Zufuhrleitung zum Einbringen eines ersten Kohlenstoffträgers in den Einschmelzvergaser.

Der Einschmelzvergaser ist dadurch gekennzeichnet, dass zumindest eine Kohlenstoffträgerleitung zum Einbringen eines zweiten gasförmigen und/oder flüssigen Kohlenstoffträgers sowie zumindest eine Medienzufuhrleitung zum Einbringen eines zweiten sauerstoffhaltigen Gases in einen Mischbereich innerhalb des Einschmelzvergasers oberhalb von dessen Festbett vorgesehen ist, wobei der Mischbereich zumindest teilweise durch eine nach außen gerichtete Ausstülpung der Innenwand des Einschmelzvergasers gebildet wird.

Zum Beispiel kann vorgesehen sein, dass der Einschmelzvergaser eine Kuppel und einen daran anschließenden konischen Bereich aufweist und sich die Ausstülpung innerhalb von 50-100%, insbesondere innerhalb von 50-75%, der Höhe des konischen Bereichs befindet. Oder es kann vorgesehen sein, dass der Einschmelzvergaser eine Kuppel und einen daran anschließenden konischen Bereich aufweist, wobei der untere Teil der Kuppel als zylindrischer Bereich ausgebildet ist, und sich die Ausstülpung innerhalb des zylindrischen Bereichs befindet.

Das erfindungsgemäße Verfahren zeichnet sich dadurch aus, dass vermehrt flüssige oder gasförmige Kohlenwasserstoffe für die Erzeugung von flüssigen Stahlvorprodukten verwendet werden können, und weniger feste Kohlenstoffträger verwendet werden müssen. Letztere sind in manchen Regionen schlechter verfügbar als flüssige oder gasförmige Kohlenwasserstoffe. Da flüssige oder gasförmige Kohlenwasserstoffe einen höheren Anteil an Wasserstoff aufweisen als feste Kohlenstoffträger kann dieser Wasserstoff einfach für die Reduktion verwendet werden. Kompressoren und $CO_2$-Entfernungsanlagen und damit verbundene Energiekosten können mit dem erfindungsgemäßen Verfahren eingespart werden.

KURZE BESCHREIBUNG DER FIGUREN

Die Erfindung wird im Folgenden anhand der beispielhaften und schematischen Figuren näher erläutert.

Fig. 1 zeigt eine erfindungsgemäße Verbundanlage aus Einschmelzvergaser, erster und zweiter Reduktionsanlage,

Fig. 2 zeigt den Einschmelzvergaser aus Fig. 1, mit einer ersten Ausführungsform des Mischbereichs,

Fig. 3 zeigt den Einschmelzvergaser aus Fig. 1, mit einer zweiten Ausführungsform des Mischbereichs durch eine Ausstülpung in Form eines Rohres.

WEGE ZUR AUSFÜHRUNG DER ERFINDUNG

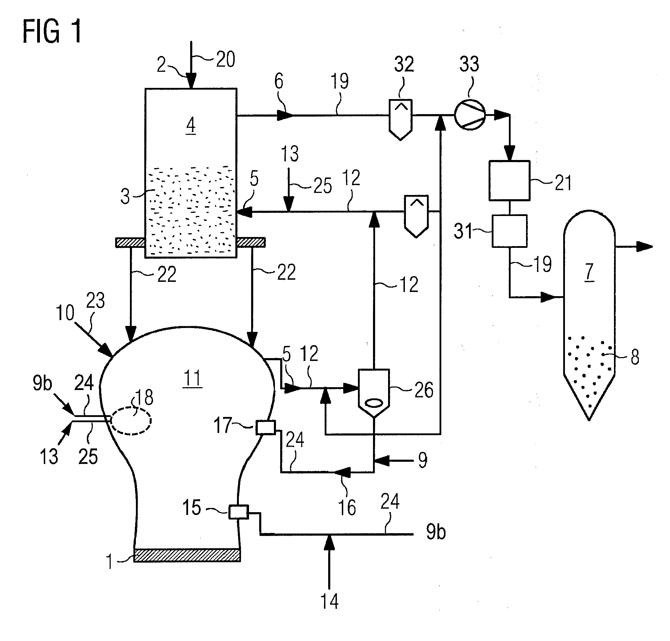

Fig. 1 zeigt eine Anlage zum Durchführen des erfindungsgemäßen Verfahrens zur Herstellung von flüssigem Roheisen 1 in der Ausführung einer Corex®-Direktreduktions-Verbundanlage. Einer ersten Reduktionsanlage 4, einem Corex®-Reduktionsschacht mit Festbett, werden über einer Zufuhrleitung 20 zur Zufuhr von eisenoxidhaltigen Einsatzstoffen 2 die eisenoxidhaltigen Einsatzstoffe 2 zugeführt.

Die eisenoxidhaltigen Einsatzstoffe 2 werden mittels eines Reduktionsgases 5 zu einem teilreduzierten ersten Eisenprodukt 3 reduziert, welches anschließend über eine oder mehrere in einen Einschmelzvergaser 11 mündende Eisenproduktzufuhrleitungen 22 in den Einschmelzvergaser 11 eingebracht wird. Das Eisenprodukt 3 umfasst im Rahmen des vorliegenden Textes Eisen sowohl in oxidierter, beispielsweise oxidischer, Form, als auch in reduzierter, also metallischer, Form. Im Eisenprodukt 3 kann das Eisen in beiden Formen vorliegen; dann ist beispielsweise von vorreduziertem Eisenträger-Material die Rede, welches gegenüber metallischer Form zwar noch nicht vollständig fertig reduziert ist, gegenüber einem vorherigen Zustand jedoch schon stärker reduziert ist. Es kann auch in nur einer der beiden Formen vorliegen. Im Fall von Corex® ist das Eisenprodukt 3 beispielsweise heißes, sogenanntes direkt reduziertes Eisen (direct reduced iron, DRI), oder entsprechendes Eisenträger-Material mit einer Metallisierung, die es noch nicht als DRI qualifiziert. Beim Corex®-Verfahren wird das Eisenprodukt 3 aus dem mit heißem Reduktionsgas 5 begasten Reduktionsschacht der ersten Reduktionsanlage 4 ausgetragen und mittels Schwerkraft über ein oder mehrere Fallbeine, und gegebenenfalls Verteilklappen, in den Einschmelzvergaser 11 befördert. Es können beispielsweise mehrere, über den Umfang der Kuppel des Einschmelzvergasers 11 verteilte Fallbeine vorgesehen sein.

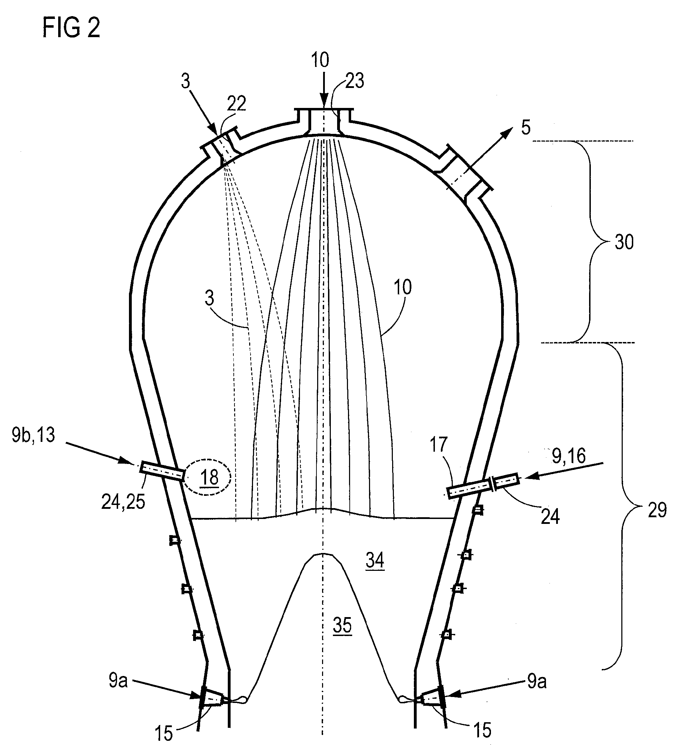

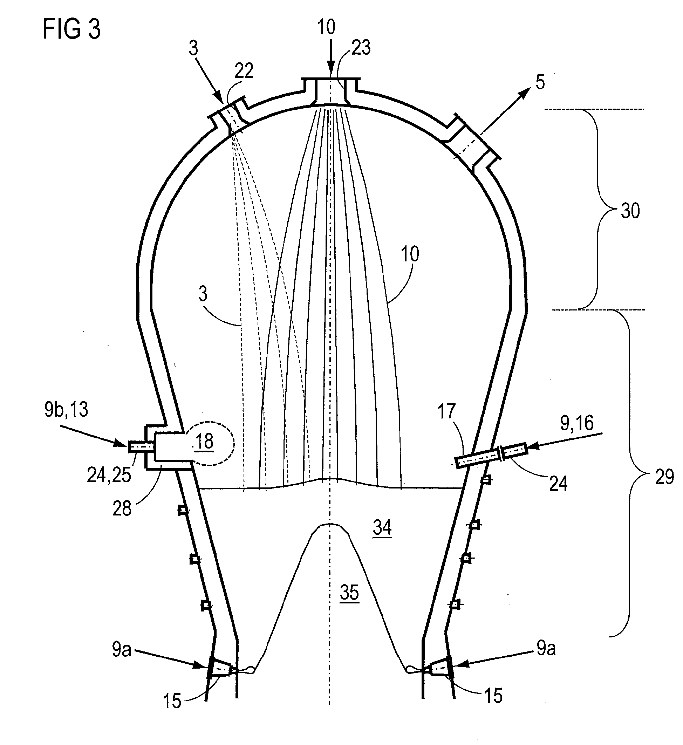

Zusätzlich werden in den Einschmelzvergaser 11 als erster Kohlenstoffträger 10 feste Kohlenstoffträger, als Stückkohlen und/oder agglomerierte Feinkohle und/oder kohlehaltige Briketts, über eine Zufuhrleitung 23 und erstes sauerstoffhaltiges Gas 9, 9a über Medienzufuhrleitungen 24 eingebracht. Die Chargierung von erstem Kohlenstoffträger 10 und teilreduziertem Eisenprodukt 3 in den Einschmelzvergaser 11 erfolgt in der Regel voneinander getrennt. Der erste Kohlenstoffträger 10 wird beispielsweise aus einem Vorratsbehälter für kohlehaltiges Material über Förderschnecken einer zentral in der Kuppel des Einschmelzvergasers 11 angebrachten Verteilvorrichtung zugeführt, von welcher der erste Kohlenstoffträger 10 bei der Eingabe in den Einschmelzvergaser 11 über den Querschnitt des Einschmelzvergasers 11 verteilt wird, siehe hierzu Fig. 2 und 3.

Die in den Einschmelzvergaser 11 eingebrachten Kohlenstoffträger 10 sowie gegebenenfalls die Feinkohle 14 werden mittels des sauerstoffhaltigen Gases 9a unter Entstehung des Reduktionsgases 5 vergast. Es entsteht ein Gasgemisch, das hauptsächlich aus CO und $H_2$ besteht.

Das Reduktionsgas 5 wird über die Reduktionsgasleitung 12 in die erste Reduktionsanlage 4 eingebracht, wobei zuvor eine Entstaubung in einer Entstaubungseinrichtung 26 erfolgt. Der abgeschiedene Staub wird wieder dem Einschmelzvergaser 11 zugeführt, nämlich mittels eines oder mehrerer Staubbrenner 17.

Das in den Einschmelzvergaser 11 eingebrachte erste Eisenprodukt 3 wird durch die bei der Vergasung der Kohlenstoffträger 10 entstehende Wärme zu dem flüssigen Roheisen 1 aufgeschmolzen. Das im Einschmelzvergaser 11 erschmolzene heiße Metall und die Schlacke werden abgezogen.

Das bei der Reduktion der eisenoxidhaltigen Einsatzstoffe 2 verbrauchte Reduktionsgas wird als Topgas 6 bezeichnet und aus der ersten Reduktionsanlage 4 über eine Exportgasleitung 19 als Exportgas abgezogen und hier mittels Nasswäscher 32 gereinigt. Das Exportgas kann in einem Kompressor 33 komprimiert, anschließend einer $CO_2$-Entfernung 21 und einer Aufheizung 31 unterworfen und in eine zweite Reduktionsanlage 7 zur Herstellung eines teilreduzierten zweiten Eisenprodukts 8, insbesondere Direct Reduced Iron (DRI) in Form von Eisenschwamm, eingebracht werden. Für diese zweite Reduktionsanlage 7 entfällt somit eine eigene Anlage zur Reduktionsgaserzeugung, beispielsweise ein Reformer, da dieser Prozess im Einschmelzvergaser 11 stattfindet.

Ein Teil des Reduktionsgases 5 kann nach Austritt aus dem Einschmelzvergaser 11 in einem Nasswäscher 27 weiter gereinigt, gekühlt und dem Exportgas 6 zugemischt werden.

Der Einschmelzvergaser 11 verfügt über drei Arten von in den Einschmelzvergaser 11 mündenden Einbringelementen, welche als Sauerstoffdüse 15, als Staubbrenner 17 und als Mischbereich 18 ausgebildet sind, welche aber jeweils auch in mehrfacher Ausführung vorhanden sein können. Außenseitig, bezogen auf den Einschmelzvergaser 11, sind die Einbringelemente mit den Medienzufuhrleitungen 24 für das zweite sauerstoffhaltige Gas 9b verbunden. Es ist zumindest eine Kohlenstoffträgerleitung 25 vorhanden, mittels welcher der zweite Kohlenstoffträger 13, der flüssig und/oder gasförmig sein kann, in den Einschmelzvergaser 11 eingebracht wird. Es kann zusätzlich auch, sofern der zweite Kohlenstoffträger gasförmig ist, jeweils eine Kohlenstoffträgerleitung 25 in die Reduktionsgasleitung 12 münden.

Über die Kohlenstoffträgerleitung 25, welche in den Mischbereich 18 mündet, wird dem Einschmelzvergaser 11 ein zweiter Kohlenstoffträger 13 in flüssiger und/oder in Gasform zugeführt, beispielsweise Koksofengas oder Erdgas.

Koksofengas hat eine typische Zusammensetzung von

65 Volumsprozent Wasserstoff ($H_2$),
2,5 Volumsprozent Stickstoff ($N_2$),
6 Volumsprozent Kohlenmonoxid (CO),
22 Volumsprozent Methan ($CH_4$),
3 Volumsprozent andere Kohlenwasserstoffe ($C_nH_m$),
1,5 Volumsprozent Kohlendioxid ($CO_2$).

Die Kohlenstoffträgerleitung 25 kann in diesem Fall mit einer Kokerei verbunden sein.

Erdgas hat eine typische Zusammensetzung von

75-99 Volumsprozent Methan,
1-15 Volumsprozent Ethan,
1-10 Volumsprozent Propan.

Darüber hinaus kann Schwefelwasserstoff, Stickstoff und Kohlenstoffdioxid enthalten sein.

Der zweite Kohlenstoffträger 13 und zweites sauerstoffhaltiges Gas 9b in Form von technisch reinem Sauerstoff werden in den Mischbereich 18 eingebracht, der knapp über dem Festbett des Einschmelzvergasers 11 in dessen Inneren vorgesehen ist, hier auf gleicher Höhe wie der Staubbrenner 17, unterhalb der Kuppel. Der Mischbereich 18 ist hier nicht durch Einbauten, wie Trennwände, vom restlichen Innenraum des Einschmelzvergasers 11 abgetrennt. Im Betrieb des Einschmelzvergasers 11 ist der Mischbereich 18 durch die Reaktionszone (Flamme) erkennbar, die bei der vollständigen Oxidation eines kleinen Teils (kleiner 25%) des zweiten Kohlenstoffträgers 13 zu Kohlenstoffdioxid $CO_2$ und Wasser $H_2O$ entsteht. Die Medienzufuhrleitung 24 für das zweite sauerstoffhaltige Gas 9b und die Kohlenstoffträgerleitung 25 münden in den Mischbereich 18. Die beiden Leitungen können einen spitzen Winkel miteinander einschließen, sodass sich zweites sauerstoffhaltiges Gas 9b und zweiter Kohlenstoffträger 13 innerhalb des Mischbereichs 18 aufeinander zu bewegen und dadurch vermischen. Es können auch mehrere Düsen für jedes der beiden Medien 9b, 13 vorgesehen sein, die so angeordnet sind, dass sich eine Verwirbelung der beiden Medien 9b, 13 ergibt, wenn diese durch die Düsen in den Mischbereich 18 eintreten.

Durch die Mischung von zweitem Kohlenstoffträger 13 und zweitem sauerstoffhaltigen Gas 9b im Mischbereich 18 kommt es zu einer partiellen Oxidation, das heißt, die Kohlenwasserstoffe des zweiten Kohlenstoffträgers 13 werden zum überwiegenden Teil zu Kohlenstoffmonoxid CO und Wasserstoff $H_2$ umgesetzt. Zu einem kleinen Teil (kleiner 25%) werden im Mischbereich 18 der Sauerstoff des sauerstoffhaltigen Gases 9b und die Kohlenwasserstoffe vollständig oxidiert zu Kohlenstoffdioxid $CO_2$ und Wasser $H_2O$. Dabei entsteht eine Flamme mit einer Flammtemperatur von mehr als 1000 °C, nämlich etwa zwischen 1150 und 1500°C, wodurch eine ausreichend hohe Temperatur für die Umsetzung zu Reduktionsgas vorliegt.

Der kleine Teil (kleiner 10%) von Kohlenwasserstoffen des zweiten Kohlenstoffträgers 13, der im Mischbereich 18 nicht oder nur in kleinere Kohlenwasserstoffe zerlegt wird, kann dann im restlichen Volumen innerhalb des Einschmelzvergasers 11 durch als Katalysator wirkende, ohnehin vorhandene Staubpartikel, welche unter anderem auch metallisches Eisen enthalten, weiter zerlegt werden.

Selbstverständlich können mehrere solcher Mischbereiche 18 vorgesehen sein, z.B. mehrere Mischbereiche 18 auf gleicher Höhe und über den Umfang des Einschmelzvergasers 11 verteilt, oder mehrere Mischbereiche 18 übereinander, oder mehrere Mischbereiche übereinander und über den Umfang verteilt.

In Fig. 2 ist der Einschmelzvergaser 11 aus Fig. 1 allein dargestellt. Ein erster Kohlenstoffträger 10 in Form von Kohle (durchgezogene Linien) wird durch den mittleren Auslass in der Kuppel 30, in welchen die Zufuhrleitung 23 mündet, in den Einschmelzvergaser 11 eingebracht. Der erste Kohlenstoffträger 10 wird dabei durch eine zentral in der Kuppel des Einschmelzvergasers 11 angebrachte Verteilvorrichtung (nicht dargestellt) zugeführt, von welcher der erste Kohlenstoffträger 10 über den Querschnitt des Einschmelzvergasers 11 verteilt wird.

Das Eisenprodukt 3 aus dem Reduktionsschacht der ersten Reduktionsanlage 4, nämlich direkt reduziertes Eisen DRI, wird mittels Schwerkraft über mehrere, als Fallbeine ausgebildete Eisenproduktzufuhrleitungen 22, in den Einschmelzvergaser 11 befördert. Es sind mehrere solcher Fallbeine über den Umfang der Kuppel 30 des Einschmelzvergasers 11 verteilt.

Eisenprodukt 3 und Kohlenstoffträger 10 fallen durch die Kuppel 30 nach unten in den konischen Bereich 29 des Einschmelzvergasers 11 und bilden dort das Festbett 34, das den konischen Bereich 29 hier etwa bis zur Hälfte füllt. Es besteht aber auch die Möglichkeit, den unteren Teil der Kuppel 30 in Form eines Zylinders zu verlängern und den konischen Bereich 29 zu verkürzen. In diesem Fall könnte der konische Bereich 29 sogar vollständig mit Festbett 34 gefüllt werden. Der Durchtritt der Kohlenstoffträgerleitung 25 und der Medienzufuhrleitung 24 bzw. des dargestellten Leitungsstücks, und damit auch der Mischbereich 18, würden dann im verlängerten unteren zylindrischen Bereich der Kuppel 30 angeordnet werden. Im Zentrum des Festbetts 34 unterhalb von dessen Oberfläche findet sich eine reaktionsfreie Zone, die als toter Mann 35 bezeichnet wird.

Sowohl der zweite Kohlenstoffträger 13 als auch das zweite sauerstoffhaltige Gas 9b werden hier mittels eines Leitungsstücks, welches eine Fortsetzung bzw. Vereinigung der Kohlenstoffträgerleitung 25 und der Medienzufuhrleitung 24 darstellt, durch die Wand des konischen Bereichs 29 geführt. Kohlenstoffträger 13 und zweites sauerstoffhaltiges Gas 9b können bereits in diesem Leitungsstück vermischt werden. Sie können aber auch noch getrennt in diesem Leitungsstück geführt (etwa in konzentrischen Rohren) und sich erst in einem Endbereich des Leitungsstücks, das z.B. als Düse ausgebildet ist, vermischen oder erst nach dem Ende des Leitungsstücks im Inneren des Einschmelzvergasers 11. Jedenfalls findet im Mischbereich 18, der an das dargestellte Leitungsstück anschließt, das (weitere) Vermischen von Kohlenstoffträger 13 und zweitem sauerstoffhaltigem Gas 9b und eine partielle Oxidation statt.

Der Durchtritt der Kohlenstoffträgerleitung 25 und der Medienzufuhrleitung 24 bzw. des dargestellten Leitungsstücks liegt hier etwa zwischen 50-75% der Höhe des konischen Bereichs 29 (von unten gemessen) des Einschmelzvergasers 11. Damit befindet sich auch der Mischbereich 18 etwa zwischen 50-75% der Höhe des konischen Bereichs 29. Je nach Ausführungsform kann die Anordnung auch oberhalb 75 % des konischen Bereiches 29 bzw. im unteren Teil der Kuppel 30 liegen, etwa wenn der untere Teil der Kuppel 30 als zylindrischer Bereich ausgebildet ist.

In Fig. 3 ist eine Ausführungsvariante für den Mischbereich 18 in Form eine Ausstülpung dargestellt, die hier durch ein zylindrisches Rohr 28 gebildet wird. Sonst ist der Aufbau des Einschmelzvergasers 11 und der Corex®-Anlage gleich zu Fig. 1 bzw. Fig. 2.

Das zylindrische Rohr 28 ist in eine entsprechende Öffnung im Einschmelzvergaser 11 eingesteckt und schließt plan mit der Innenwand des Einschmelzvergasers 11 ab, ragt also nicht in das Volumen innerhalb des Einschmelzvergasers 11 hinein. Die Medienzufuhrleitung 24 für das zweite sauerstoffhaltige Gas 9b und die Kohlenstoffträgerleitung 25 für den zweiten Kohlenstoffträger 13 münden beide in den Mischbereich 18, der einerseits durch das Rohr 28 selbst gebildet wird, andererseits auch in das restliche Volumen des Einschmelzvergasers 11 hineinragt. Innerhalb des Rohres 28 kann eine ungestörte Durchmischung des zweiten sauerstoffhaltigen Gases 9b und des zweiten Kohlenstoffträgers 13 erfolgen, die Energie für die partielle Oxidation innerhalb des Rohrs 28 muss dabei ebenfalls durch die partielle Oxidation des zweiten Kohlenstoffträgers 13 aufgebracht werden, wobei die Verluste durch eine entsprechende Feuerfestauskleidung des Rohres 28 gering gehalten werden.

Um sicherzustellen, dass sich der Mischbereich 18 möglichst in das Innere des Einschmelzvergasers 11 erstreckt und somit die Wärmeverluste im Mischbereich 18 gering gehalten werden, kann die Längsachse des Rohrs 28 normal zur Tangentialebene der Innenwand des Einschmelzvergasers 11 ausgerichtet sein. In Fig. 3 ist das Rohr 28 annähernd waagrecht ausgerichtet.

Der Durchmesser des Rohres 28 beträgt in der Regel ein Mehrfaches des Durchmessers einer Medienzufuhrleitung 24 oder einer Kohlenstoffträgerleitung 25 oder eines Staubbrenners 17 oder der Austrittsöffnung einer Sauerstoffdüse 15.

Um mehr vom zweiten Kohlenstoffträger 13 umsetzen zu können, können mehrere Rohre 28 pro Einschmelzvergaser 11 vorgesehen sein. Dabei können die Rohre 28 und die zugehörigen Mischbereiche 18 - wie bei Fig. 1 erläutert - über den Umfang und/oder die Höhe des Einschmelzvergasers 11 verteilt sein.

Die beiden Leitungen 24, 25 können wieder einen spitzen Winkel miteinander einschließen, sodass sich zweites sauerstoffhaltiges Gas 9b und zweiter Kohlenstoffträger 13 innerhalb des Mischbereichs 18, insbesondere innerhalb des Rohres 28, aufeinander zu bewegen und dadurch vermischen. Es können auch mehrere Düsen für jedes der beiden Medien 9b, 13 vorgesehen sein, die so angeordnet sind, dass sich eine Verwirbelung der beiden Medien 9b, 13 ergibt, wenn diese durch die Düsen in den Mischbereich 18, insbesondere in das Rohr 28, eintreten.

Sowohl für Mischbereiche 18 ohne Ausstülpung als auch für Mischbereiche 18 mit Ausstülpung gilt, dass diese bevorzugt 1-2 m oberhalb des Festbetts 34 angeordnet sind. Der oder die Mischbereiche 18 können sich zum Beispiel, wie in Fig. 2 und 3 dargestellt, unterhalb der Kuppel 30 des Einschmelzvergasers 11 im konischen Bereich 29 des Einschmelzvergasers 11 oder im unteren Teil der zylindrisch verlängerten Kuppel 30 befinden. Der konischen Bereich 29 ist der sich Kegelstumpf-förmig nach oben erweiternde Teil des Einschmelzvergasers 11, an den die annähernd halbkugelförmige Kuppel 30 anschließt.

Wird statt der Corex®-Anlage eine Finex®-Anlage verwendet, so wird nach dem letzten der drei bis vier Wirbelschichtreaktoren, in welchen die Vorreduktion des Feinerzes stattfindet, ein Teilstrom des Offgases als Exportgas entnommen und sonst wie in Fig. 1 verwendet. Dem Exportgas kann wie bei der Corex®-Anlage auch ein Teil des Überschussgases aus dem Einschmelzvergaser 11 zugegeben werden.

Liste der Bezugszeichen:

1    flüssiges Roheisen
2    eisenoxidhaltige Einsatzstoffe
3    teilreduziertes erstes Eisenprodukt
4    erste Reduktionsanlage
5    Reduktionsgas
6    Topgas
7    zweite Reduktionsanlage
8    teilreduziertes zweites Eisenprodukt
9    sauerstoffhaltiges Gas
9a    erstes sauerstoffhaltiges Gas
9b    zweites sauerstoffhaltiges Gas
10    erster Kohlenstoffträger
11    Einschmelzvergaser
12    Reduktionsgasleitung
13    zweiter Kohlenstoffträger
14    Feinkohle
15    Sauerstoffdüse
16    Staub
17    Staubbrenner
18    Mischbereich
19    Exportgasleitung
20    Zufuhrleitung zur Zufuhr von eisenoxidhaltigen Einsatzstoffen
21    $CO_2$-Entfernung
22    Eisenproduktzufuhrleitung
23    Zufuhrleitung für den ersten Kohlenstoffträger 10
24    Medienzufuhrleitung
25    Kohlenstoffträgerleitung
26    Entstaubungseinrichtung
27    Nasswäscher
28    Ausstülpung (Rohr)

29    konischer Bereich des Einschmelzvergasers 11
30    Kuppel des Einschmelzvergasers 11
31    Aufheizung
32    Nasswäscher für Topgas
33    Kompressor
34    Festbett
35    toter Mann

**Patentansprüche**

1.  Verfahren zur Herstellung von flüssigem Roheisen (1), wobei das Verfahren umfasst

    - Reduktion von eisenoxidhaltigen Einsatzstoffen (2) zu einem teilreduzierten ersten Eisenprodukt (3) in einer ersten Reduktionsanlage (4) mittels eines Reduktionsgases (5) und Abziehen des bei der Reduktion verbrauchten Reduktionsgases (5) als Topgas (6) oder Offgas,
    - Einbringen des teilreduzierten ersten Eisenprodukts (3), eines ersten sauerstoffhaltigen Gases (9a) und eines ersten Kohlenstoffträgers (10) in einen Einschmelzvergaser (11),
    - Vergasung der Kohlenstoffträger (10) mit dem sauerstoffhaltigen Gas (9a) und Aufschmelzen des teilreduzierten ersten Eisenprodukts (3) zu dem flüssigen Roheisen (1) unter Entstehung des Reduktionsgases (5) im Einschmelzvergaser (11),
    - Einbringen zumindest einer Teilmenge des Reduktionsgases (5) in die erste Reduktionsanlage (4) mittels einer Reduktionsgasleitung (12), **dadurch gekennzeichnet, dass** das Verfahren weiter umfasst:
    - Einbringen eines zweiten gasförmigen und/oder flüssigen Kohlenstoffträgers (13) sowie eines zweiten sauerstoffhaltigen Gases (9b) in einen Mischbereich (18) innerhalb des Einschmelzvergasers (11) oberhalb von dessen Festbett,
    - Vermischen des zweiten gasförmigen und/oder flüssigen Kohlenstoffträgers (13) mit dem zweiten sauerstoffhaltigen Gas (9b) im Mischbereich (18), wobei zum Erreichen einer partiellen Oxidation des zweiten gasförmigen oder flüssigen Kohlenstoffträgers (13) innerhalb des Mischbereichs (18) das Verbrennungsluftverhältnis im Bereich von 0,2 bis 0,45 eingestellt wird, bevorzugt zwischen 0,3 und 0,35, und
    - Durchmischen des aus der partiellen Oxidation resultierenden Gases aus dem Mischbereich (18) mit dem Gas im restlichen Volumen innerhalb des

    Einschmelzvergasers (11).

2.  Verfahren nach Anspruch 1, **dadurch gekenn-**

**zeichnet, dass** das zweite sauerstoffhaltige Gas technisch reiner Sauerstoff mit einem $O_2$-Gehalt von zumindest 90% ist.

3.  Verfahren nach Anspruch 1 oder 2, **dadurch gekennzeichnet, dass** das Vermischen des zweiten gasförmigen und/oder flüssigen Kohlenstoffträgers (13) mit dem zweiten sauerstoffhaltigen Gas (9b) allein durch Druck und Richtung des zweiten gasförmigen und/oder flüssigen Kohlenstoffträgers (13) und des zweiten sauerstoffhaltigen Gases (9b) beim Einbringen erfolgt.

4.  Verfahren nach einem der Ansprüche 1 bis 3, **dadurch gekennzeichnet, dass** das Durchmischen des aus der partiellen Oxidation resultierenden Gases aus dem Mischbereich (18) mit dem Gas im restlichen Volumen innerhalb des Einschmelzvergasers (11) allein durch Druck und Richtung beim Einbringen des zweiten Kohlenstoffträgers (13) und des zweiten sauerstoffhaltigen Gases (9b) erfolgt.

5.  Verfahren nach einem der vorhergehenden Ansprüche, **dadurch gekennzeichnet, dass** der Mischbereich (18) vom im Einschmelzvergaser befindlichen Reduktionsgas (5) zumindest teilweise umgeben wird.

6.  Verfahren nach einem der vorhergehenden Ansprüche, **dadurch gekennzeichnet, dass** der Mischbereich (18) vom restlichen Volumen innerhalb des Einschmelzvergasers (11) zumindest teilweise räumlich abgetrennt ist.

7.  Verfahren nach einem der vorhergehenden Ansprüche, **dadurch gekennzeichnet, dass** der Mischbereich (18) zumindest teilweise durch eine nach außen gerichtete Ausstülpung (28) der Innenwand des Einschmelzvergasers (11) gebildet wird.

8.  Verfahren nach einem der vorhergehenden Ansprüche, **dadurch gekennzeichnet, dass** der Mischbereich (18) sich über dem Festbett des Einschmelzvergasers (11) in einem Temperaturbereich von 1000-1100°C befindet, insbesondere um 1050°C.

9.  Verfahren nach einem der vorhergehenden Ansprüche, **dadurch gekennzeichnet, dass** zumindest ein Mischbereich (18) sich 1-2 m oberhalb des Festbetts (34) des Einschmelzvergasers (11) befindet.

10. Verfahren nach einem der vorhergehenden Ansprüche, **dadurch gekennzeichnet, dass** im Falle eines gasförmigen zweiten Kohlenstoffträgers dem Einschmelzvergaser (11) pro Tonne Roheisen mehr als 100 m³ vom zweiten Kohlenstoffträger zugeführt werden, insbesondere mehr als 140 m³ pro Tonne Roheisen.

**11.** Verfahren nach einem der vorhergehenden Ansprüche, **dadurch gekennzeichnet, dass** das Topgas (6) oder Offgas zumindest teilweise in eine zweite Reduktionsanlage (7) eingebracht wird, die als Direktreduktionsschacht oder als Wirbelschicht ausgebildet ist und in der weitere eisenoxidhaltige Einsatzstoffe zu einem teilreduzierten zweiten Eisenprodukt (8), insbesondere zu Eisenschwamm, reduziert werden.

**12.** Einschmelzvergaser (11) zur Durchführung des Verfahrens nach einem der Ansprüche 1 bis 11, umfassend zumindest

- eine Eisenproduktzufuhrleitung (22) zum Einbringen des teilreduzierten ersten Eisenprodukts (3),
- eine Medienzufuhrleitung (24) zum Einbringen eines ersten sauerstoffhaltigen Gases (9a) und
- eine Zufuhrleitung (23) zum Einbringen eines ersten Kohlenstoffträgers (10) in den Einschmelzvergaser (11)

**dadurch gekennzeichnet,**
**dass** zumindest eine Kohlenstoffträgerleitung (25) zum Einbringen eines zweiten gasförmigen und/oder flüssigen Kohlenstoffträgers (13) sowie zumindest eine Medienzufuhrleitung (24) zum Einbringen eines zweiten sauerstoffhaltigen Gases (9b) in einen Mischbereich (18) innerhalb des Einschmelzvergasers (11) oberhalb von dessen Festbett vorgesehen ist, wobei der Mischbereich (18) zumindest teilweise durch eine nach außen gerichtete Ausstülpung (28) der Innenwand des Einschmelzvergasers (11) gebildet wird.

**13.** Einschmelzvergaser nach Anspruch 12, **dadurch gekennzeichnet, dass** der Einschmelzvergaser (11) eine Kuppel (30) und einen daran anschließenden konischen Bereich (29) aufweist und sich die Ausstülpung (28) innerhalb von 50-100%, insbesondere innerhalb von 50-75%, der Höhe des konischen Bereichs (29) befindet.

**14.** Einschmelzvergaser nach Anspruch 13, **dadurch gekennzeichnet, dass** der Einschmelzvergaser (11) eine Kuppel (30) und einen daran anschließenden konischen Bereich (29) aufweist, wobei der untere Teil der Kuppel (30) als zylindrischer Bereich ausgebildet ist, und sich die Ausstülpung (28) innerhalb des zylindrischen Bereichs befindet.

FIG 1

FIG 2

FIG 3

Europäisches
Patentamt

European
Patent Office

Office européen
des brevets

**EUROPÄISCHER RECHERCHENBERICHT**

Nummer der Anmeldung

EP 16 16 7288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 104 946 841 A (BAOSHAN IRON & STEEL) 30. September 2015 (2015-09-30) * Zusammenfassung * * Abbildungen 1-2 * ----- | 1 | INV. C21B13/14 C21B13/00 |
| A | CN 103 966 380 A (BAOSHAN IRON & STEEL) 6. August 2014 (2014-08-06) * Zusammenfassung * * Abbildung 1 * ----- | 1-14 | |
| A | EP 0 594 557 A1 (VOEST ALPINE IND ANLAGEN [AT]; RES INST IND SCIENCE & TECH [KR]) 27. April 1994 (1994-04-27) * Abbildung 1 * ----- | 1-14 | |

RECHERCHIERTE
SACHGEBIETE (IPC)

C21B

Der vorliegende Recherchenbericht wurde für alle Patentansprüche erstellt

| Recherchenort | Abschlußdatum der Recherche | Prüfer |
|---|---|---|
| Den Haag | 1. November 2016 | Gimeno-Fabra, Lluis |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    .......................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 16 7288

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-11-2016

| Im Recherchenbericht angeführtes Patentdokument | Datum der Veröffentlichung | Mitglied(er) der Patentfamilie | Datum der Veröffentlichung |
|---|---|---|---|
| CN 104946841 A | 30-09-2015 | KEINE | |
| CN 103966380 A | 06-08-2014 | KEINE | |
| EP 0594557 A1 | 27-04-1994 | AT 404735 B | 25-02-1999 |
| | | AU 675245 B2 | 30-01-1997 |
| | | AU 4913493 A | 05-05-1994 |
| | | BR 9304322 A | 24-05-1994 |
| | | CA 2108816 A1 | 23-04-1994 |
| | | CN 1090331 A | 03-08-1994 |
| | | CN 1167156 A | 10-12-1997 |
| | | CZ 9302227 A3 | 13-12-1995 |
| | | CZ 9603231 A3 | 12-08-1998 |
| | | DE 59309957 D1 | 30-03-2000 |
| | | DE 59310316 D1 | 23-01-2003 |
| | | EP 0594557 A1 | 27-04-1994 |
| | | EP 0969107 A1 | 05-01-2000 |
| | | JP 3549911 B2 | 04-08-2004 |
| | | JP 3550083 B2 | 04-08-2004 |
| | | JP H06340909 A | 13-12-1994 |
| | | JP 2001152225 A | 05-06-2001 |
| | | RU 2104309 C1 | 10-02-1998 |
| | | RU 2111259 C1 | 20-05-1998 |
| | | SK 115593 A3 | 07-09-1994 |
| | | SK 156396 A3 | 10-09-1997 |
| | | TW 283168 B | 11-08-1996 |
| | | TW 436523 B | 28-05-2001 |
| | | US 5534046 A | 09-07-1996 |
| | | US 5535991 A | 16-07-1996 |
| | | US 5584910 A | 17-12-1996 |
| | | ZA 9307820 B | 19-05-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015000604 A1